# EUROPEAN PATENT APPLICATION

(11) **EP 1 398 933 A1**
(43) Date of publication of application: **17.03.2004**
(21) Application number: 02020448.3
(22) Date of filing: 11.09.2002
(51) Int. Cl.: H04L 29/06

(54) **Client-server secured signaling protocol**

(71) Applicant: Web. De AG, 76227 Karlsruhe (DE)
(72) Inventor: Schneider, Uwe, Dr., 76356 Weingarten (DE); Rinke, Stefan, Dipl.-Ing., 76275 Ettlingen (DE)
(74) Representative: Schnekenbühl, Robert Matthias L.

(57) **Abstract**

Signaling protocol for being communicated between a client and a server in first communications environment in particular, internet and providing information with respect a second communications environment in particular, a telephone network to at least one of the client and the server.

## Description

### Field of the invention

In general, the present invention relates to signaling in a communications environment. In particular, the present invention relates to a signaling protocol for signaling in a communications environment, wherein signaling provides information with respect to another communications environment. Further, the present invention relates to a communications environment, a method, a client, a server and software program products for implementing or carrying out the signaling protocol to which present invention relates to.

### Background of the invention

Today, several different communications environments are existing, for example computer based communications environments such as the Internet, communications environment comprising telephone networks, such as PSTN based telephone communication environments, GSM communications environments, UMTS communications environments and the like. Although, existing communications environments exhibit a plurality of communications capabilities, the communications environments are generally isolated from each other. Thus, communications performed in one communication environment are separated from communications performed in another communications environment. A result, in a communications environment used for communications no information are provided with respect to another communications environment in view of communications performed therein.

### Object of the invention

In general, the object of the present invention is to provide for solutions which overcome the presently existing isolated coexistence of communications environments. In particular the object of the present invention is to provide for solutions which allow to have access in one communications environment to information with the respect to another communications environment, specifically in view of communications performed therein.

### Short description of the invention

The above object of the present invention is achieved by a signaling protocol, a communications environment, a signaling method, a client, a server and software programs product defined in the independent claims. Further advantages features and embodiments are defined in the respective dependent claims.

In particular, the present invention provides a signaling protocol which defines signaling to be communicated between a client and a server in a first communications environment. The signaling in line with the signaling protocol of the present invention is for providing information with the respect to a second communications environment to the client and/or to the server.

In this context, information with respect to the second communications environment comprise data and/or information indicating operation modes of the second communications environment currently existing and/or desired/requested by the client and/or the server and communications performed in the second communications environment.

Preferably, the signaling protocol defines a signaling which is to be actively communicated from the client to the server and/or vice versa. As a result, the signaling according to the signaling protocol of the present invention is based on pushes from the client and/or the server such that polling of the client and/or the server is not necessary. This allows for a real time signaling.

Preferably, the signaling protocol according to the present invention is used for a signaling to be communicated between a specific entity as the client and a telecommunications website as the server associated to the client.

In this context, the first communications environment comprises the specific entity and the telecommunication website which corresponds to the specific entity. In this case, the first communications environment can comprise a computer-based communications environment system or network, such as the internet.

In order to provide for a secure signaling including identification and authentication, in particular with the respect to the client, it is contemplated that the signaling protocol according to the present invention defines that any signaling communicated according thereto will be signed by a signature on the client's side and/or will be encrypted on the clients side. Preferably, encryption is defined to be performed subsequently signing a message.

Further, it is contemplated that the signaling protocol according to the present invention defines that, on the server's side, received signaling is decrypted and/or the signature is retrieved from signaling received by the server. In order to check the validity of the signature, the server can compare the retrieved signature with a signature calculated on the server's side or obtained by other means.

Preferably, the signaling protocol according to the present invention defines that each signaling comprises different protocol data units for providing the information with respect to the second communications environment.

The signaling protocol can further define that each of the protocol data units compromises a first protocol data unit portion indicating a version of the signaling protocol, second protocol data unit portion indicating the number of the respecting protocol data unit, a third protocol data unit portion including a time stamp, a fourth protocol data unit portion including data useable by at least one of the client and the server and a fifth protocol data unit portion including a signature.

Here, the fifth protocol data unit portion can include a signature of the first, second, third and fourth protocol data unit portions as the signature.

The first, second, third, fourth and fifth protocol data unit portions can be symmetrically encrypted, in particular according to RC 4.

Further, the signature in the fifth protocol data unit portion can be retrieved/obtained by means described in RFC 2104 on the server's side. Also it is possible that the first, the second, the third and the fifth protocol data unit portion each has a predefined length.

The first protocol data unit portion can represent a number of the version of the signaling protocol currently used, for example for example protocol version one.

The second protocol data unit portion can indicate the number of its protocol data unit. In view of the numbering of protocol data unit exemplary used herein, it is now referred to the embodiment of the signaling protocol according to the present invention, according to which a so called initialization protocol data unit is defined.

The initialization protocol data unit represents also a protocol data unit for a signaling but can have a different structure with respect to its portions. In particular, the initialization protocol data unit can comprise a first portion indicating the current version of the signaling protocol, a second unit indicating the number of this protocol data unit, a third portion indicating a time stamp generated on the client's side, a fourth portion indicating a major client version indicating major changes of the version (e.g. new functionalities), a fifth portion indicating a minor client version indicating minor changes of the version (e.g. error/bug corrections, design modifications), a sixth portion indicating a session cipher, for example according to RC 4, a seventh portion indicating a length of a session key in bytes, for example 16 bytes, an eighth portion indicating the session key generated on the client's side and a ninth portion indicating a signature generated on the client's side comprising 64 byte.

The initialization protocol data unit is used by the client to contact the server to request that a signaling with respect to the second communications environment is desired. Therefore, the initialization protocol data unit is a signaling in initializing or initiating a signal according to the signaling protocol of the present invention. Therefore, this protocol data unit has the number 1. In the following, different protocol data units and respective numbers are listed. The numbers associated to the protocol data units are just of exemplary character which also applies for the numbers contemplated for the in initializing protocol data unit.

As protocol data unit 2, the present invention content play a server-hello-signaling from the server to the client.

Further the present invention contemplates a protocol data unit 3 for a client-login-signaling from the client to the server, a protocol data unit 4 for login-response-signaling from the server to the client, a protocol data unit 5 for a keep-alive-request-signaling from the client to the server, a protocol data unit 6 for a keep-alive-response-signaling from the server to the client, a protocol data unit 7 for a logout-signaling from the client to the server, a protocol data unit 8 for a line-state-message-signaling from the server to the client, a protocol data unit 9 for a new-server-state-signaling from the server to the client, a protocol data unit 10 for a line-action-signaling from the client to the server, a protocol data unit 11 for a resynchronization-request-signaling from the client to the server, a protocol data unit 12 for a login-to-session-signaling from the client to the server and a protocol data unit 13 for an error-message-signaling from the server to the client. With respect to these protocol data units, it is referred to the description of preferred embodiments of the present invention for a more detailed description thereof.

Further, to obtain the above object, the present invention provides a communications environment comprising a client and a server for communicating with each other by means of a first communications environment. In particular, the communications environment according to the present invention utilizes a signaling according to an embodiment of the signaling protocol according to the present invention for providing information with respect to a second communications environment at least to one of the client and the server.

Preferably, the client of the communications environment according to the present invention is a specific entity which a telecommunications web site is associated to while the server thereof is at least partially represented by the telecommunications web site associated to the specific entity.

Moreover, the above object is achieved by a method, a client, a server, and software program products defined in the further independent claims.

### Short description of the figures

In the following description of preferred embodiments it is referred to the enclosed figures wherein:
Fig. 1 is an illustration of an embodiment of the present invention, and
Fig. 2 is an illustration of an embodiment of a communications environment according to the present invention comprising a specific entity and a telecommunications web site implementing a signaling, a protocol according to the present invention.

### Description of preferred embodiments

The signaling protocol described herein is also referred to as a telecommunications web site signaling protocol. Data exchange for this signaling protocol is telegram-oriented and "light weighted". This is to enable a server utilizing that signaling protocol to handle a plurality of clients. Further, all data exchanges or "telegrams" are idempotent in its semantics which means that a double transmission can be achieved without problems. Further, data communications are secure since they are private and authenticated both from the server-side and the client-side. As set forth above, data polling is not employed in general. Rather, a client communicates its signaling to the server via a push of data while the server also communicates its signaling as push. Moreover, signaling characterized measures, modifications, actions and variations to be carried out with respect to a communications environment are generally not immediately answered by a respective return signaling. Rather, such a return signaling will be communicated upon the intended/desired modification etc. with respect to the particular communications environment is actually effected. For data communications according to the protocol described here, a user datagram protocol UDP is employed.

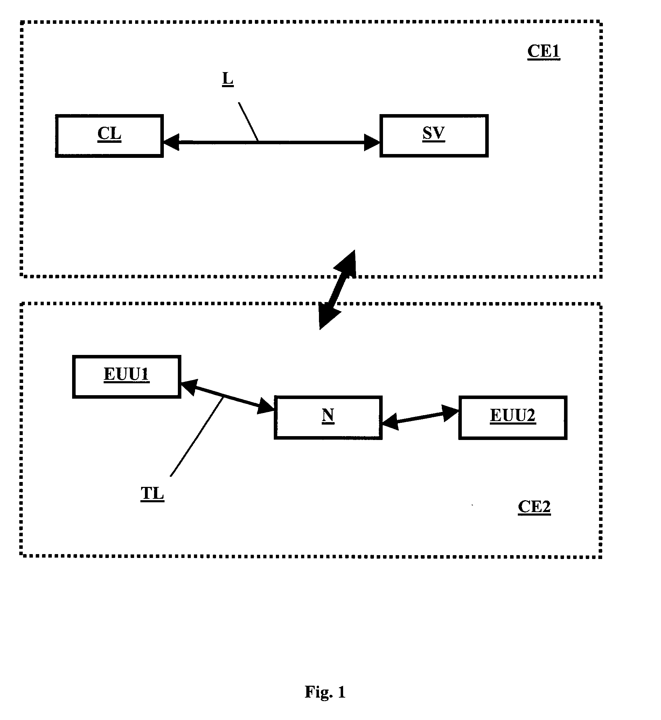

As illustrated in Fig. 1, a first communications environment C1 comprises a plurality of clients of which only client CL is shown is shown in that figure and a server SV which can be embodied as hardware and/or software server. A communication between the client CL and the server SV is executed via a communications link L. Examples for this communications link comprise any wired and/or wireless transmission lines capable of transmitting data and/or information.

Further, Fig. 1 illustrates a second communications environment CE2 wherein by means of a network communications between at least two end user units can be performed. For illustrative purposes, only two end user devices EUU1 and EUU2 are shown. The network N an be, for example, a telephone network, while the end user units EUU1 and EUU2 can be units or devices comparable to a telephone or providing its functions. Further, it is contemplated that communications originating from one of the end user units in the second communications environment CE2 can be routed from the second communications environment CE2 to another communications environment such as the first communications environment CE1 or any other communications environment. With respect to the first communications environment CE1 this is illustrated by means of the arrow from the network N to the first communications environment CE1 and vice versa.

The signaling protocol according to the present invention is, as set forth above, employed to exchange information between the client CL and the server SV with respect to the second communications environment CE2. In particular, the signaling protocol according to the present invention provides for a signaling characterizing desired, requested, prevailing and actually existing operation modes of the second communications environment CE2 with respect to an end user unit and its communications via the network N. Specifically, the end user to which a signaling according to the present invention between the client CL and the server SV relates to is an end user unit being associated to the client. As illustrative example, the client CL can be a personal computer while the end user unit to which a signaling according to the present invention to and from the client CL is related to can be a telephone or any other communications unit which can be or is used by the user of the personal computer representing the client CL.

In order to promote an understanding of the present invention, in the following it is assumed that the client CL is a computer-based end user unit such as a personal computer, that the server SV is a system or unit comparable to a server known from the Internet, that the first communications environment CE1 comprises, at least partially, the Internet such that the communications link L is an Internet communication link, that the network N is a telephone network and the end user units EUU 1 and EUU2 are telephones all thereof being comprised by the second communications environment CE2, thus, representing a telephone communications environment.

In view of this scenario, signaling according to the signaling protocol according to the present invention, is communicated between the client CL and the server SV and provides information to the client CL and to the server SV with respect to intended/desired and carried out communications by means of the first end user unit EUU1 for which it is assumed that it is associated to, as set forth above, the client CL.

The signaling protocol according to the present invention provides different functionalities which are, in line with the above assumptions, explained with respect to the telephone communications environment CE2.

For indicating from the client's side to the server that a signaling according to the signaling protocol of the present invention is requested, the functionality "login" for the client's side and, in response thereto, the functionality "acknowledgement" from the server's side are used.

With respect to conditions within the second communications environment CE2 relating to states of a telephone line connecting the network N and the end user unit EUU1, the signaling protocol according to the invention provides the functionality "line state". That functionality generally signalizes the state of the telephone line TL shown in Fig. 1. In particular, that functionality comprises a signaling "ring" indicating that a telephone line to the first end user unit EUU1 is desired from a third party, i.e. the telephone EUU1 of the user of the client CL rings. Further, the functionality "line state" provides for a signaling "hang up" indicating that the telephone line to the end user unit EUU1 terminated, i.e. that the user of the telephone EUU1 has put down the handset. Signaling and functionality in this regard are employed from the server SV to the client CL. This is due to the fact that the server SV obtains data and/or information in this regard from the second communications environment CE2. Examples of how such data and/or information can be provided to the server are explained below.

In order to enable the client CL to indicate to the server SV desired/requested actions with respect to a telephone line to and/or from the end user unit EUU1, the signaling protocol according to the present invention provides the functionality "line actions". For example, that functionality provides for a signaling indicating that the user of the client CL wants to establish a telephone communications link or telephone line from his/her end user unit EUU1 to the end user unit EUU2, for example a telephone associated to another person. Acknowledgements from the server's side in this regard are assumed to be signaled implicitly. For providing information from the server's side to the client's side, the functionality "server state" is provided. That functionality allows for informing the client CL about states, conditions, operational modes and the like within the second communications environment CE2 with respect to the end user unit EUU1 associated to the client CL. Further, the signaling protocol according to the present invention provides for the functionalities "keep alive", "log out", "time synchronization" and "packet delay" which will be explained in the description of protocol data units of the signaling protocol according to the present invention below. In order to inform both the client CL and the server SV in a unique manner with respect to a telephone line to and/or from the end user unit EUU1, all signaling related to that telephone line is characterized by a unique identification for that telephone line.

In general, all signaling according to the signaling protocol of the present invention is encrypted, advantageously according to TLS 1.0/SSL 3.0. That means an asymmetrical handshake and a symmetrical session encryption is used without client certificates. The security of the signaling protocol according to the present invention is designed according to SSL standard. As a result, the server SV transmits a certificate including a public key. Subsequently, a session key provided from the client's side is encrypted with that key and used further on. As an option, it is contemplated that the signaling protocol according to the present invention does not support different certificates. Then, the step of transmitting a certificate including a public key from the server SV to the client CL can be omitted. Rather, in that case it is assumed that the public key is available on the client's side.

Further, the signaling according to the present invention includes the following definitions:
- Word:: 16 bit
- Long:: 32 bit
- Little/big endian:: the line format is big endian, i.e. Most Significant Byte (MSB) first. Thus, the numeral 5 can be expressed as word as follows: 00 05.
- Byte steam (system of octets):: MSB first. Bytes are integrated into a data bracket one after another.
- Strings:: Coding with lengths descriptors, i.e. one word length is followed by string data. In case of an uneven length, a padding byte is subsequently used. Example: "Klaus = 00 05 'K' 'l' 'a' 'u' 's' 00". Not existing strings (empty strings) are coded as 00 00.
- Padding for symmetrical block ciphers:: Since symmetrical ciphers often employ blocks having a predefined length, the lengths of the data packets are coded separately. Remaining space at the end of a data packet is padded with 0xAA 0x55 until the next block is reached. The length is coded by utilizing a word a the beginning.

The signaling protocol according to the present invention employs two different ciphers: An asymmetrical initialization cipher (according to RSA) and a symmetrical session cipher according to RC4.

From the protocol data unit defined in the signaling protocol according to the present invention, the initialization protocol data unit is only encrypted with the initialization cipher. Since the session cipher is proposed from the client's side, the session cipher is variable.

In order to provide security, all protocol data units of the signaling protocol according to the present invention are always encrypted. Further, all protocol data units are provided with a time stamp and are signed. Except for the initialization protocol data unit, all protocol data units of the signaling protocol according to the present invention are defined to include the following protocol data unit portions PDUP:
- PDUP1:: current version of the signaling protocol according to the present invention (e.g. 1); 1 word
- PDUP2:: protocol data unit number; 1 word;
- PDUP3:: time stamp; 2 words
- PDUP4:: usable data, x words
- PDUP5:: signature of PDUPs1-4, 16 byte

The protocol data unit portions 1-5 are symmetrically encrypted. In case of RC4 this maintains the length of the protocol data units.

The time stamp in the protocol data unit portion 4 prevents replay attacks since, for a verification of the signature, the time stamp is additionally used for a plausibility assessment. In this context plausibility refers to a protocol data unit being "not too old", for example not older than 30 minutes.

For checking a signature of a protocol data unit, the signature of a received protocol data unit is retrieved and compared with a calculated signature. A calculated signature obtained by means of the receiving party is calculated according to RFC 2104 as HMAC signature.

The initialization protocol data unit, also referred to as protocol data unit 1 (PDU1), provides for a so-called "client hallo" signaling from the client's side to the server's side and has the following format:
- PDUP1:: Protocol version (e.g. 1) ; 1 Word
- PDUP2:: PDU number 1; 1 Word
- PDUP3:: Time stamp; 1 Long
- PDUP4:: Client version major [indicating major changes of the version (e.g. new functionalities); example: In version 3.5 of the client , "3" represents the major version number and "5" the minor version number]
- PDUP5:: Client version minor [indicating minor changes of the version (e.g. error corrections); example: In version 3.5 of the client , "3" represents the major version number and "5" the minor version number]
- PDUP6:: Session cipher: 1 (RC4)
- PDUP7:: Session key length in Bytes (typically 16 Bytes)
- PDUP8:: Session key
- PDUP9:: Signature; 64 Bytes

The client generates the session key and the signature key.

Semantics for the client: "I contact the server and request capacities of the server. If capacities of the server are available, I inform the server of the server of my IP-address/port. If no server capacity is available, I expect a forwarding address. In case I do not receive any information from the server within a certain time period (e.g. 30 seconds), I try again.".

Semantics for the server: "A client having a peer-IP-address wants to register. In case, a session is already associated to this IP-address/port, I reject/dismiss this packet. If I have capacities available, I send a response (see "server hallo" signaling described below) and expect a response from the client within a predefined period of time (e.g. 1 minute). Otherwise, I reject/dismiss this client session. If I do not have any capacities available, I return a forwarding/redirecting address to the client. In case the received request is alleged to be a request from an intruder (e.g. DoS attack), I record this event and reject/dismiss the packet."

The protocol data unit portions 3-9 transmitted to the server are encrypted with the initialization cipher algorithm. As a result, the format of the protocol data unit PDU1 can be given as:
- PDUP1:: Protocol version (e.g. 1) ; 1 Word
- PDUP2:: PDU number 1; 1 Word
- PDUP3-9:: Crypt data (RSA 1024); 128 Bytes

In response to the "client hallo" signaling, the server returns a so-called "server hallo" signaling. This return packet has the following structure:
- PDUP1:: Protocol version (e.g. 1) ; 1 Word
- PDUP2:: PDU number 2; 1 Word
- PDUP3:: Timestamp (Server time), 1 Long
- PDUP4:: Server version major
- PDUP5:: Server version minor
- PDUP6:: Acknowledge (Success: 1; Error: 0); 1 Word
- PDUP7:: Reason code (Success: 0); 1 Word
- PDUP8:: Redirect required (Yes: 1; No: 0); 1 Word
- PDUP9:: String: New Host: Format: HOST:PORT (optional in case of redirect)
- PDUP10:: HMAC over PDUP1 - PDUP9; 16 Bytes

The protocol data unit portions 3-10 are encrypted with a session key and a session cipher. This applies also for the description of signaling structures and formats below.

Semantics for the server: "I inform the client that he is allowed to authenticate himself or that he should contact another server. In case I have capacities available for a client, I wait a certain period of time (e.g. 60 seconds) for an authentication of the client. Otherwise, I dismiss/reject the whole client context with respect to this IP-address/port."

Semantics for the client: "If I receive a redirection/forwarding server address, I contact that address (e.g. a new URL) by means of a "client hallo" signaling. Otherwise, I authenticate myself to the server."

For authentication, identification and login, the client employs a so-called "client login" signaling communicated from the client's side to the server's side which exhibits the following format:
- PDUP1:: Protocol version (e.g. 1); 1 Word
- PDUP2:: PDU number 3; 1 Word
- PDUP3:: Time stamp (Client time); 1 Long
- PDUP4:: Usemame; 1 String
Pass word; 1 String
- PDUP5:: Signature; 16 Bytes

Semantics for the client: "I transmit my login and the password of my account to the server. I expect an acknowledgement by the server within a certain period of time (e.g. 30 seconds). Otherwise I keep trying."

Semantics for the server: "The client identified/known by its IP-address/port wants to log in. I check the validity of its account and inform the client in this regard."

In response to the "client login" signaling, the server returns to the client a so-called "login response" signaling with the following structure:
- PDUP1:: Protocol version (e.g. 1) ; 1 Word
- PDUP2:: PDU number 4; 1 Word
- PDUP3:: Time stamp (Server time); 1 Long
- PDUP4:: Success/Error (e.g.: Success=1, i.e. login and password correct; Error=0, i.e. login and/or password incorrect); 1 Word Reason code (Success: 0; Error: 1)); 1 Word Session Identification SessionID (for later accesses per HTTPS, e.g. : Session=fa34543978) ; 1 String Number of pairs of area tags and URLs; n x [number of pairs of area tags and URL in a packet] Area tag (e.g. :"Hist"),1 String URL prefix for area (e.g.: "https://logcw01.web.de/hist/") ; 1 String ........ [a list of string pairs indicating in an alternating manner area tags and URL prefixes for different client areas]
- PDUP5:: Signature; 16 Bytes

Semantics for the server: "I inform the client whether its login was accepted or not. In case the login was accepted, I inform the client about its session identification sessionID and provide at least one pair of HTML-area-tags and URLs by means of which the client is enabled to download content utilizing HTTPS. (In case of a telecommunications web site functioning as server: "I generate the session identification sessionID on the session server and register the session with the connection manager and the state managers of the core engines."). Otherwise I inform the client why the login has failed."

Semantics for the client: "In case of a successful login, I obtain a list of area tags and associated URLs. I expect that the server will communicate messages with respect to the state of the telephone line to my end user unit (telephone) in the future. Otherwise, I do not receive a session identification and no URLs but instead a coded reason for a rejection."

In order to inform the server from the client's side that a signaling according to the signaling protocol of the present invention is still desired/requested, a so-called "keep alive request" signaling is used which has the following format:
- PDUP1:: Protocol version (e.g. 1) ; 1 Word
- PDUP2:: PDU number 5; 1 Word
- PDUP3:: Time stamp (client time); 1 Long
- PDUP4:: empty
- PDUP5:: Signature; 16 Bytes

The empty PDUP4 indicates the server that this message is a "keep alive request" signaling. The "keep alive request" signaling will be communicated from the client to the server in predefined intervals to indicate "I am alive". Otherwise the server will "drop" or "forget" the client. Then, the client has to login again ("client hello" signaling) to be connect to the server in this regard.

In response to the "keep alive request" signaling received from the client the server returns a so-called "keep alive response" signaling with the following format
- PDUP1:: Protocol version (e.g. 1) ; 1 Word
- PDUP2:: PDU number 6; 1 Word
- PDUP3:: Time stamp (server time); 1 Long
- PDUP4:: empty
- PDU 5:: Signature; 16 Bytes

The empty PDUP4 indicates the client that this message is a "keep alive response" signaling.

In case the client wants to terminate signaling actions according to the signaling protocol of the present invention, the client communicates a so-called "logout" signaling to the server with the following structure:
- PDUP1:: Protocol version (e. g. 1 ) ; 1 Word
- PDUP2:: PDU number 7; 1 Word
- PDUP3:: Timestamp (server time); 1 Long
- PDUP4:: Reason code [reasoning from the client to the server for logout]
- PDUP5:: Signature; 16 Bytes

In response thereto, the server terminates the session related to the client (in case of a telecommunications web site functioning as server, this termination is not performed with respect to the session server).

To inform the client of modifications, variations, changes, etc. of the state of the line to the end user unit (telephone) associated to the client, the server employs a so-called "line state message" signaling with the following structure:
- PDUP1:: Protocol version (e.g. 1) ; 1 Word
- PDUP2:: PDU number 8; 1 Word
- PDUP3:: Time stamp (server time); 1 Long
- PDUP4:: new/current of the line; 1 Word Line identification LineID; 1 String Call identification CallID; 1 String Caller (User of Client) identification CallID; 1 String; optional Caller Name (User of Client) Caller name; 1 String; optional
- PDUP5:: Signature; 16 Bytes

By means of a so-called "new server state" signaling, the server provides the client with information with respect to the second communications environment being not directly related to the telephone line. Rather, that signaling realizes all push semantics possessing the characteristics of indicating an actualization. The "new server state" signaling has the following structure:
- PDUP1:: Protocol version (e.g. 1) ; 1 Word
- PDUP2:: PDU number 9; 1 Word
- PDUP3:: Time stamp (Server time); 1 Long
- PDUP4:: Key for type of updated information (e.g. "42" for incoming call in the absence of the user of the client); 1 Word Value of up-dated information (e.g. "5") or empty string; 1 String Concerned/affected area tag or 0 if not applicable; 1 Word Pull URL without SessionID (e.g. "https://abcw01.web.de/ShowNumberOfCalls/");
1 String; optional;
- PDUP5:: Signature; 16 Bytes

If the amount of used data (PDUP4) is small, the information can be directly transmitted by means of the protocol data unit portion 4 PDUP4. For example, in the case of an incoming call directed to the end user unit (telephone) associated to the client, the following "new server state" signaling can be employed:
- PDUP1:: Protocol version (e.g. 1) ; 1 Word
- PDUP2:: PDU number 9; 1 Word
- PDUP3:: Time stamp (Server time); 1 Long
- PDUP4:: "42" (incoming call in the absence of the user of the client) "5" "12" (indication element for incoming calls in the absence of the user of the client)
--- (not used)
- PDUP5:: Signature; 16 Bytes

In case the protocol data unit portion 4 PDUP4 is not sufficient to communicate respective information to the client, this protocol data unit portion can be used to initiate a call from the client's side to the server to obtain the information the server wants to provide to the client.

For example, the server wants to inform the client that a new fax has been received and wants to inform the client about the content of the fax, the following "new server state" signaling can be used:
- PDUP1:: Protocol version (e.g. 1 ) ; 1 Word
- PDUP2:: PDU number 9; 1 Word
- PDUP3:: Time stamp (server time); 1 Long
- PDUP4:: "10" (new fax to the user of the client)
"1"
"1" (new browser/TCW window)
"https://doccw01.web.de/ShowFax/?faxid=42"
- PDUP5:: Signature; 16 Bytes

In case the client wants to instruct the server to perform a specific action with respect to the second communications environment and in particular to components (hardware and/or software) associated to and/or integrated into the end user unit (telephone) associated to the client, a so-called "line action" signaling from the client to the server is employed. Such signaling exhibits the following format:
- PDUP1:: Protocol version (e.g. 1) ; 1 Word
- PDUP2:: PDU number 10; 1 Word
- PDUP3:: Time stamp (client time); 1 Long
- PDUP4:: Action code ( e.g. "hangup", "park", telephone line to ... ") ; 1 Word
LineID; 1 Word
CallID; 1 String
Destination; 1 String; optional
Contact Identification ContactId; 1 String; optional
- PDUP5:: Signature; 16 Bytes

Semantics for the client: "I instruct the server to perform a specific action with respect to my telephone. I expect that the server (continuously) informs me with regard to the performance to the requested action."

Semantics for the server: "The client requests a specific action to be performed with respect to its telephone. I obtain information with respect to the state of the telephone associated to the client, and forward the same to the client. (In case a telecommunications web site is used as server the request for a specific action with respect to the telephone associated to the client is forwarded to the core engine.).

Examples of action codes used in the protocol data unit portion 4 are "DIAL", "CRE-ATECONF", "XFERCONF" and "DETACHCONF". In case of the action code "DIAL", and assuming no call identification callID has been transmitted, the "line action" signaling indicates a so-called initiating call which means that the number of the telephone associated to the client has to be called first, and the number of a party to which a telephone communication has to be established subsequently. Here, the line identification lineID is irrelevant. If the "destination" information is used in the protocol data unit portion 4, that information contains a telephone number or any comparable address information of a party to which the client wants to establish a communications link. Otherwise, in case the contact identification contactID is set in the protocol data unit portion 4, the contactID contains a destination contact, the number of which has to be called. In case, the user or the client has already activated his/her telephone and requires connection with a party to be called, the call identification callID indicates the identification of the existing call (i.e. telephone line to the telephone associated to the client). In such a case, the line identification lineID is irrelevant while the "destination" information contains a telephone number or the like of the party to be called. The contact identification contactID comprises an identification of the destination/party to be contacted while the telephone number or the like provided by the "destination" information of the protocol data unit portion 4 overwrites the contact identification contactID therein.

By means of the action code "CREATECONF" the client indicates that a conference call is to be established. Here, the line, call and contact identifications lineID, callID and contactID are irrelevant, while the "destination" information in the protocol data unit portion 4 indicates the number of channels, lines, etc. to be reserved.

The action code "XFERCONF" informs the server that the client intends to transfer a telephone line into a conference call. Here, the call identification callID indicates the identification of the call to which the telephone line was directed so far. The line identification lineID indicates the telephone line to be transferred, while the "destination" information characterizes the call identification callID of the conference call to which the telephone line is to be transferred. The contact identification contactID is irrelevant here.

In order to remove a telephone line from a conference call, the action code "DETACHCONF" is used. Here, the "destination information" and contact identification contactID are irrelevant, while the call identification callID identifies the conference call from which the telephone line should be removed. The line identification lineID characterizes the telephone line to be removed from the conference call.

Further action codes are contemplated for holding, terminating, etc. of telephone lines/connections. In order to obtain a synchronization of the client with the server, and in order to obtain all relevant information with respect to signaling from the calling to the signaling protocol of the present invention, the client communicates a so-called "resynch request" signaling to the server:
- PDUP1:: Protocol version (e.g. 1) ; 1 Word
- PDUP2:: PDU number 11; 1 Word
- PDUP3:: Time stamp (Client time); 1 Long
- PDUP4:: empty
- PDUP5:: empty

Usually, in response to such signaling the server returns a "line state" and/or "new server state" signaling to the client.

Assuming the client is already logged in with respect to the server but has not requested a signaling according to the signaling protocol of the present invention (cf. "client login"; PDU number 3), a so-called "login to session" signaling can be communicated from the client to the server. Such signaling has the following structure:
- PDUP 1:: Protocol version (e.g. 1); 1 Word
- PDUP2:: PDU number 12; 1 Word
- PDUP3:: Time stamp (Client time); 1 Long
- PDUP4:: SessionID
- PDUP5:: Signature; 16 Bytes

This signaling can be employed if the client is already communicating with the server, for example participates in a conventional internet session with the server. Then, the "log in to session" signaling communicated from the client, informs the server that the client also wants to participate in a session wherein a signaling according to the signaling protocol of the present invention will be employed with respect to both the client and the server.

If the server determines that failures, errors or the like have occurred with respect to the second communications environment, and in particular to the end user unit associated to the client, a so-called "error message" signaling from the server to the client is used. Such signaling has the following format:
- PDUP1:: Protocol version (e.g. 1) ; 1 Word
- PDUP2:: PDU number 13; 1 Word
- PDUP3:: Time stamp (Client time); 1 Long
- PDUP4:: Error code (see table below); 1 Word
Error Message (e.g. in English ); 1 String
LineId; 1 String
CallId; 1 String
- PDUP5:: Signature; 16 Bytes

Error codes contemplated for the "error message" signaling are listed in the table below:

| Error Code | Constant in signaling protocol header | Error Message | Meaning of LineId | Meaning of CallId |
|---|---|---|---|---|
| 0 | EC_OK | OK | irrelevant | irrelevant |
| 1 | EC_NOTAVAIL | Resource unavailable | opt. set | opt. set |
| 2 | EC_INTERNAL | Internal error | opt. set | opt. set |
| 3 | EC_TIMEOUT | Time out | opt. set | opt. set |
| 4 | EC_BUSY | Busy | Indicates respective line | Indicates respective call |
| 5 | EC_ERROR | Unspecified Server Error | opt. set | opt. set |
| 6 | EC_PABX | Error in Communication Subsystem | opt. set | opt. set |
| 7 | EC_NOPRIVS | Insufficient Privileges | opt. set | opt. set |
| 8 | EC_NOUSERCALL | No Controlling Call to User | opt. set | opt. set |
| 9 | EC_TRYAGAIN | Try again later | opt. set | opt. set |
| 10 | EC_INVALID_ACTION | Invalid Action | set | set |

The signaling protocol according to the present invention is designed such that all functionalities for generating, analyzing, sending and receiving can be encapsulated in a software library. Further, it is possible that the signaling protocol according to the present invention can be implemented into conventional client software, such as software for personal computers.

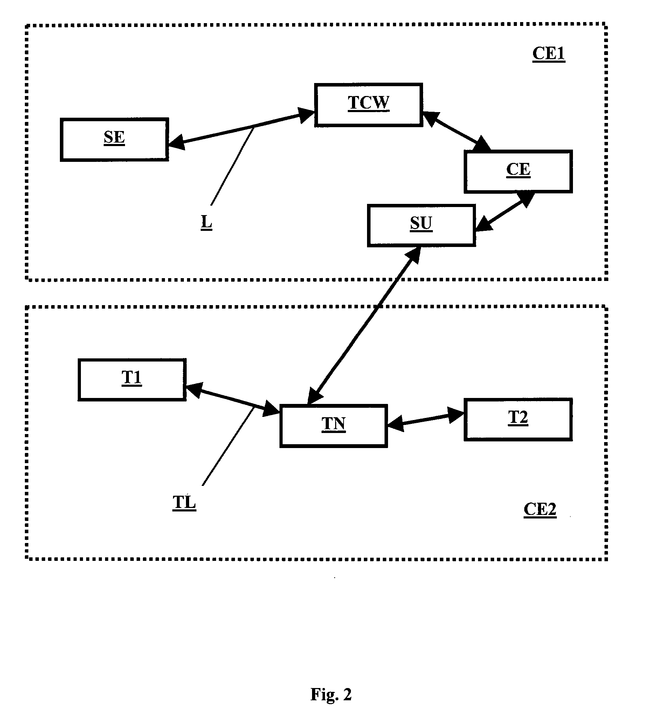

Fig. 2 illustrates an embodiment wherein the client is represented by a specific entity SE associated to a telecommunications web site TCW which can be compared to the server SV shown in Fig. 1. Further, Fig. 2 illustrates that the second communications environment CE2 is a telephone environment wherein telephones such as the telephone T1 can communicate via a telephone network TN. Examples for the telephone network TN include PSTN-based networks, GSM networks, UMTS networks, etc. For obtaining information with respect to the second communications environment CE2 the telecommunications web site TCW communicates and/or utilizes a core engine CE. For establishing communications links from the first communications environment CE1 to the second communications environment CE2, switching means SW or comparable units such as gates, gateways and the like are used. In particular, the switching means SW or the like are controlled and/or utilized by the core engine.

## Claims

1. Signaling protocol for
- being communicated between a client (CL, SE) and a server (SV, TCW) in first communications environment (CE 1), and
- providing information with respect to a second communication environment (CE 2) to at least one of the client (CL, SE) and the server (SV, TCW).

2. The signaling protocol according to claim 1, for
- providing a real time signaling by actively communicating the information with respect to the second communications environment (CE 2) from the client (CL, SE) to the server (SV, TCW), and/or
- providing a real time signaling by actively communicating the information with respect to the second communications environment (CE 2) from the server (SV, TCW) to the client (CL, SE).

3. The signaling protocol according to claim 1 or 2, for a signaling to be communicated as signaling between a specific entity (SE) as the client (CL, SE) and a telecommunications website (TCW) as the server (SV, TCW).

4. The signaling protocol according to one of the preceding claims, for a signaling as signaling to be communicated in the Internet as the first communications environment (CE 1).

5. The signaling protocol according to one of the preceding claims, for providing the information with respect to a telephone network (TN) as the second communications environment (CE 2).

6. The signaling protocol according to one of the preceding claims, defining that the signaling is to be signed by a signature before being communicated in the first communications environment (CE 1).

7. The signaling protocol according to one of the preceding claims, defining that the signaling is to be encrypted before being communicated in the first communications environment (CE 1).

8. The signaling protocol according to one of the preceding claims, defining that the signature is to be decrypted after being a communicated in the first communications environment (CE 1).

9. The signaling protocol according to one of the preceding claims, defining that the signature of the signaling is to be obtained there from after being communicated in the first communications environment (CE 1).

10. The signaling protocol according to one of the preceding claims, defining protocol data units (PDA) for the information with respect to the second communications environment (CE 2).

11. The signaling protocol according to claim 9, defining that each of the protocol data units (PDA) comprises a first protocol data unit portion indicating a version of the signaling protocol, a second protocol data unit portion indicating the number of the respecting protocol data unit (PDU), a third protocol data unit portion including a time stamp, a fourth protocol data unit portion including data useable by at least one of the client (CL, SE) and the server (SV, TCW) and a fifth protocol data unit portion including a signature.

12. The signaling protocol according to claim 10, defining that the fifth protocol data unit portion includes a signature of the first, second, third and fourth protocol data unit portions as the signature.

13. The signaling protocol according to claim 10 or 11, defining that the first, second, third, fourth and fifth protocol data unit portions are to be symmetrically encrypted.

14. The signaling protocol according to one of the claims 10 to 12, defining that the protocol data unit portions are encrypted according to RC 4.

15. The signaling protocol according to one of the claims, 10 to 13 defining that the signature in the fifth protocol data unit portion is to be retrieved by described in RFC 2104.

16. The signaling protocol according to one of the claims 10 to 15, defining that the first, the second, the third and the fifth protocol data unit portion each has a predefined length.

17. The signaling protocol according to one of the claims 10 to 15, defining that the protocol data unit for signaling of at least one of a server-hello-signaling, a client-login-signaling, a login-response-signaling, a keep-alive-requested-signaling, a keep-alive-response-signaling, a logout-signaling, a line-state-message-signaling, a new-server-state-signaling, a line-action-signaling, a resynchronization-request-signaling, a login-to-session-signaling and an error-message-signaling.

18. The signaling protocol according to one of the preceding claims, defining an initialization protocol data unit for contacting the server (SV, TCW) by means of the client (CL, SE) to indicate a request for a signaling being performed according to a signaling protocol.

19. The signaling protocol according to claim 18, defining that the initialization protocol data unit comprises a first portion indicating a version of the signaling protocol, a second portion indicating a number of the initialization protocol data unit, a third portion indicating a time stamp, a fourth portion indicating a major client version, a fifth portion indicating a minor client version, a sixth portion indicating a session cipher, a seventh portion indicating a session key length, an eighth portion indicating a session key and a ninth portion indicating a signature.

20. A communications environment, comprising
- a client (CL, SE), and
- a server (SV, TCW), wherein
- signaling between the client (CL, SE) and the server (SV, TCW) with respect to another communications environment (CE 2) is performed according to the signaling protocol according to one of the claims 1 to 19.

21. The communications environment according to claim 20, wherein
- the client (CL, SE) is a specific entity, and
- the server (SV, TCW) is a telecommunications website (TCW) being associated to the specific entity (SE).

22. The communications environment according to claim 20 or 21, comprising at least portions of the internet for communications between the client (CL, SE) and the server (SV, TCW).

23. The communications environment according to one of the claims 20 to 22, comprising the other communications environment (CE 2).

24. The communications environment according to one of the claims 20 to 23, wherein the other communications environment (CE 2) is a telephone network.

25. A method for signaling for be communicated between a client (CL, SE) and a server (SV, TCW) in a first communications environment (CE 1) wherein signaling between the client (CL, SE) and the server (SV, TCW) with the respect to a second communications environment (CE 2) is performed according to the signaling protocol according to one of the claims 1 to 19.

26. The method according to claim 25, wherein the signaling between the client (CL, SE) and the server (SV, TCW) is at least partially performed via the Internet.

27. The method according to claim 25 or 26, wherein the client (CL, SE) is a specific entity and the server (SV, TCW) is a telecommunications website (TCW) being associated to a specific entity.

28. The method according one of the claims 25 to 27, wherein the second communications environment comprises a telephone network.

29. A client (CL, SE), comprising hardware and/or software means for a signaling according to the signaling protocol to one of the claims 1 to 19.

30. The client according to claim 29, being a specific entity (SE) to which a telecommunications website (TCW) is associated to.

31. A server, comprising
hardware and/or software means for a signaling according to the signaling protocol according to one of the claims 1 to 19.

32. The server according to claim 31, being
a telecommunications website (TCW) to which a specific entity (SE) is associated to.

33. A software program product, comprising
program code portion for carrying out a signaling between a client (CL, SE) and a server (SV, TCW) in a first communications environment (CE 1) according to the signaling protocol according to one of the claims 1 to 19 for providing information with respect to a second communications environment (CE 2).

34. A software program product, comprising
program code portion for carrying out the steps according to one of the claims 25 to 28 and/or for controlling the client according to claim 29 or 30 and/or for controlling the server according to claim 31 or 32.
